Europäisches Patentamt

(19) European Patent Office

Office européen des brevets

(11) Publication number: **0 200 389**
A2

# (12) EUROPEAN PATENT APPLICATION

(21) Application number: 86302599.5

(22) Date of filing: 08.04.86

(51) Int. Cl.⁴: **G 06 F 15/20**

(30) Priority: 08.04.85 JP 73844/85

(43) Date of publication of application:
05.11.86 Bulletin 86/45

(84) Designated Contracting States:
DE FR GB IT

(71) Applicant: Kabushiki Kaisha Toshiba
72, Horikawa-cho Saiwai-ku
Kawasaki-shi Kanagawa-ken 210(JP)

(72) Inventor: Nitta, Tsuneo c/o Patent Division
Kabushiki Kaisha Toshiba 1-1 Shibaura 1-chome
Minato-ku Tokyo 105(JP)

(74) Representative: Freed, Arthur Woolf et al,
MARKS & CLERK 57-60 Lincoln's Inn Fields
London WC2A 3LS(GB)

(54) Proofreading/correction apparatus.

(57) A proofreading/correction apparatus, in an input mode, stores an input sentence into a memory (14), and displays it. In a proofreading mode, the stored sentence is read out for each clause of the sentence. In a speech synthetic section, it is converted into a synthetic speech which in turn is produced aloud by a loudspeaker (19). For checking the input sentence, an operator hears the speech while reading the sentence on the document. If finding an error, he keys in a correction instruction for the error contained clause, to assign a pointer to that clause. In a correction mode, the pointer assigned clause is negatively displayed and corrected on the CRT screen.

F I G. 1

EP 0 200 389 A2

- 1 -

## Proofreading/correction apparatus

This invention relates to a proofreading/correction apparatus which can easily proofread and correct the data or sentence as input to data input apparatuses or word processors.

In data processors for processing a large amount of data and word processors for editing sentences, the input data or sentences are compared with the original ones for error correction purposes.

By convention, the input data or sentences are displayed on the CRT screen, and an operator verifies them while seeing the screen and referring to the original data or sentences. This work is inevitably accompanied by operator's nerve exhausting and eye fatigue.

Recently, the proofreading system based on the speech synthesis technology has been developed. In this system, the input data or sentences are read aloud by a synthetic speech. The operator progresses the proofreading and error correction work while hearing the synthetic speech. When an error is found, he visually seeks the location of the error on the display screen, and moves a pointer or cursor to the error location for its correction. This process frequently takes much time and is irritative and troublesome work for the operator particularly when the operator is tired or busy.

Accordingly, an object of the present invention is to provide a proofreading/correction apparatus which can make easy proofreading and correction with good operability.

According to this invention, in an input mode, an input sentence is stored into a memory, and is displayed by a display unit. In a proofreading mode, the stored sentence is read out for each segmented unit of the sentence, e.g. phrase, clause, short sentence. In a speech synthesis section, it is converted into an artificial speech which in turn is produced aloud by a loudspeaker. For checking the input sentence, an operator hears the speech while reading the sentence on the document. If finding an error, he keys in a correction instruction for the error contained clause, to assign a pointer to that clause. In a correction mode, the pointer assigned clause is negatively displayed and corrected on the CRT screen.

This invention can be more fully understood from the following detailed description when taken in conjunction with the accompanying drawings, in which:

Fig. 1 shows a block diagram of a proofreading/correction apparatus according to an embodiment of the present invention;

Figs. 2 to 4 show flowcharts for explaining the operation of the apparatus of Fig. 1;

Fig. 5 shows the display of an English short sentence on the CRT screen;

Fig. 6 shows a block diagram of a proofreading/correction apparatus for processing Japanese language, which is another embodiment of the present invention;

Figs. 7 to 9 show flowcharts for explaining the operation of the apparatus of Fig. 6; and

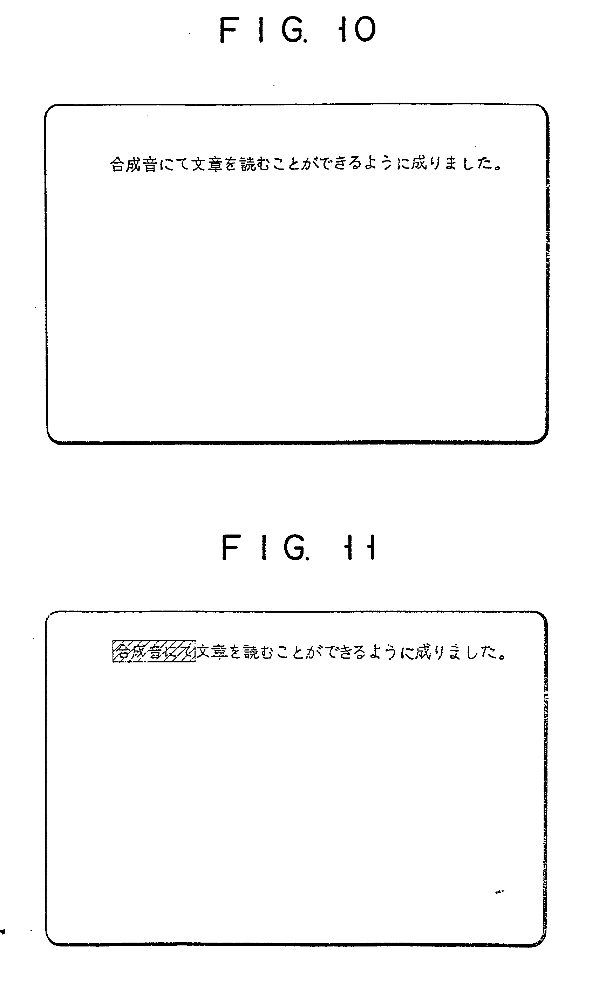

Figs. 10 and 11 show each the display of a Japanese short sentence on the CRT screen.

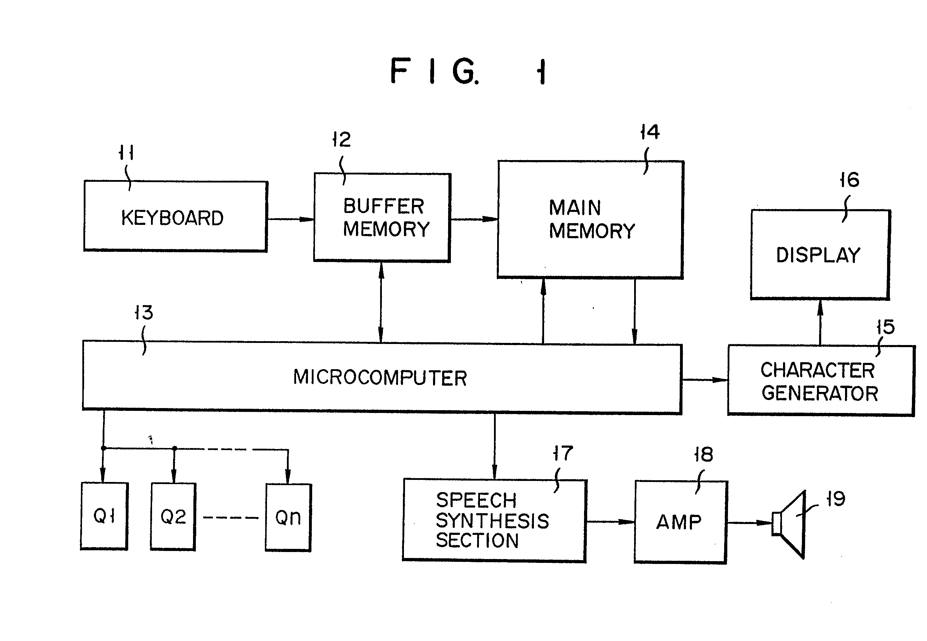

In Fig. 1, there is shown an English word processor incorporating a proofreading/correction apparatus according to the present invention.  In the processor, keyboard 11 is connected to buffer memory 12.  Buffer memory 12 is coupled with microcomputer 13.  The read and write operations for the buffer memory are controlled by microcomputer 13.  The read out port of buffer memory 12 is coupled with main memory 14 for storing English sentences as input.  Microcomputer 13 accesses main memory 14 for read and write of data. Microcomputer 13 reads out character codes from main memory 14 and load them into character generator 15. Character generator 15 is coupled with display 16 which displays the characters coming from character generator 15.

Coupled with microcomputer 13 are pointer registers Q1, Q2, ... and speech synthesis section 17 which converts phrase, clause or sentence as read out from main memory 14 into a synthetic speech.  This conversion is based on the technology as published by Dennis H. Klatt in his paper "THE DLATTALK TEXT-TO-SPEECH CONVERSION SYSTEM" in CH1747-7/82/0000, 1982 IEEE.

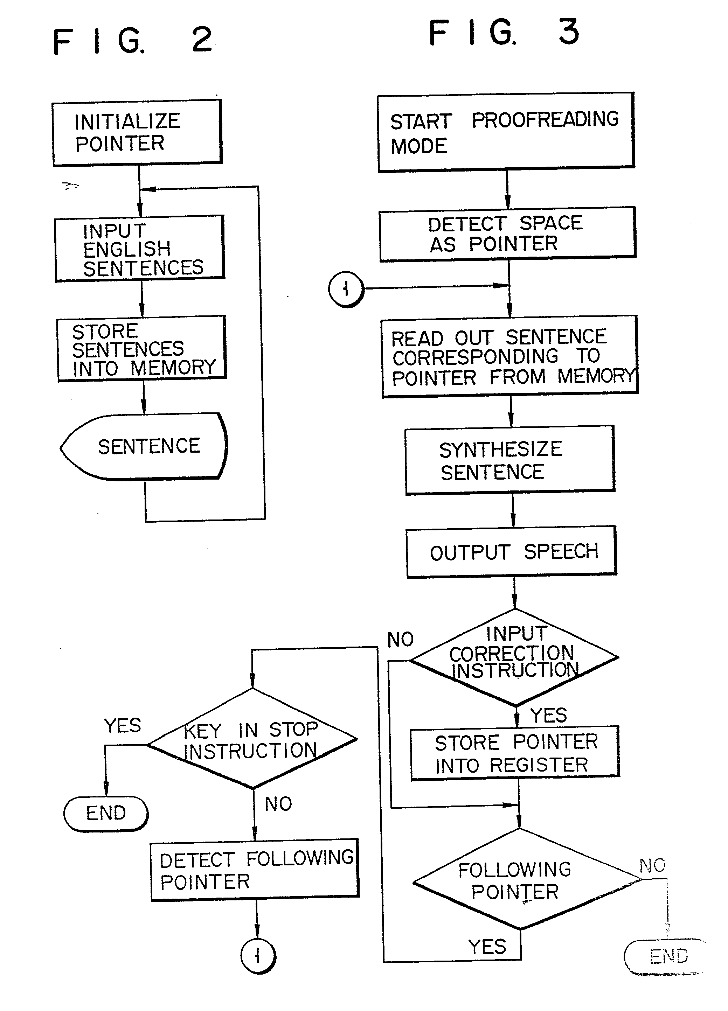

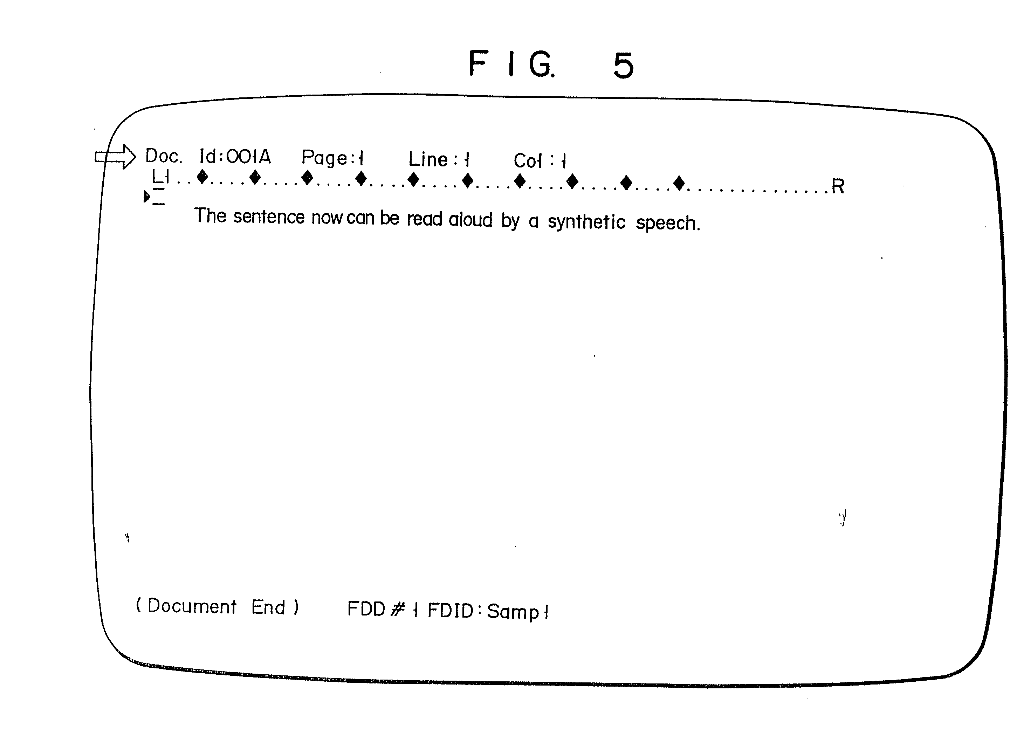

The operation of the English word processor thus arranged will be described referring to flowcharts in Figs. 2 to 4.  An input mode will first be given.  As shown in Fig. 2, the pointer is first initialized.  An operator keys in English sentences by means of keyboard 11, while seeing an original document.  Keyboard 11 is so designed that it inputs into buffer memory 12 character codes (ASCII codes) representative of English sentences.  When one sentence or one clause is loaded into buffer memory 12, and then transferred to main memory 14.  The character codes representing such sentence or clause are transferred to character generator 15 under control by microcomputer 13.  Character generator 15 generates characters representing the cause or sentence and applies them to display 16.  Display 16 displays an sentence "The sentence now can be read aloud by a synthetic speech" as shown in Fig. 5.

The above operation is continued till the sentences of the original document are all input to main memory 14. When all of the sentences on the document have been input, the input mode is completed.

Fig. 3 shows a flowchart of a proofreading mode. In this mode, the operator checks if the keyed in and displayed sentences are coincident with the sentences on the document, and if errors are found, he keys in a correction instruction. A Proofreading mode is set up by a related key on the keyboard, so· that the word processor starts its operation of the proofreading mode. In this mode, space, comma, period, etc. which are present among words, are detected as pointers. The word, phrase, clause or short sentence corresponding to the detected pointers are read out from main memory 14, and input to speech synthesis section 17. In section 17, the words coming from memory 14 are converted into speech signals. The speech signals are appropriately amplified by amplifier 18 and input to speaker 19. Loudspeaker 19 produces a synthetic speech of the clause, for example, as read out main memory 14. The operator checks the clauses on the document, while hearing the synthetic speech. When finding an error, he keys in a correction instruction. When microcomputer 13 receives the instruction through buffer memory 12, the pointer data representing a position of the clause containing the error is stored into first register Q1. Then, microcomputer 13 checks if the following pointer data is present in main memory 14. If it is present there, the microcomputer checks if a stop instruction has been input. If the answer is NO, the control of microcomputer 13 returns to the flow to read out the clause corresponding to the following pointer data from main memory 14. That is to say, the next clause is read out from memory 14, and read aloud by a synthetic speech. When the operator finds an error in the clause, a correction instruction is input to the word processor by the keyboard.  Then, microcomputer 13 loads the pointer data representing a location of the error contained clause into register Q2.  In this way, every time error is found, the correction instruction is input to the computer, and the location of the error contained clause is loaded into pointer registers Q1 to Qn.

All of the input sentences are read out memory 14, and no following pointer is present.  In this situation, the proofreading mode ends.

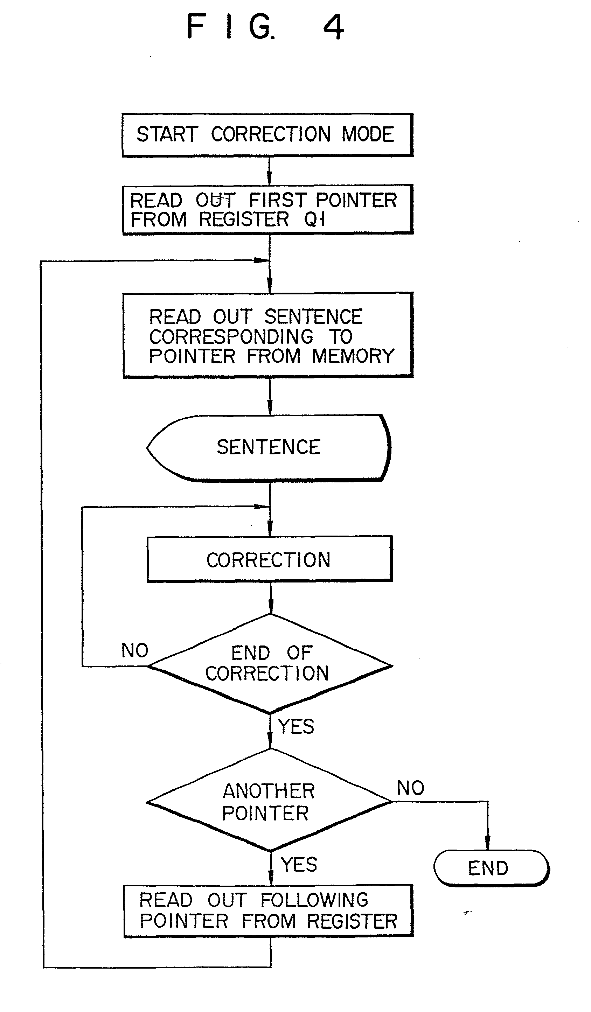

A correction mode is then executed according to the control flow shown in Fig. 4.  An operator inputs a start instruction of this mode to the word processor. Microcomputer 13 reads out first pointer data from first register Q1.  With this first pointer data, memory 14 is accessed and produces the sentence specified by the data.  The character code data of the read out sentence is transferred to character generator 15 by microcomputer 13, and is visualized by the display.  In this case, the error contained clause is displayed in the negative fashion.  The operator enters the correction work of the error contained clause.  For this correction, he enters a correct clause and replaces the error contained clause by it.  Following the first correction, microcomputer 13 reads out the following pointer data from pointer register Q2, and addresses main memory 14 by the following pointer data to read out therefrom the sentence as specified by that data.  In this way, the pointer data are read out from the subsequent pointer registers and the error contained sentences are corrected.  All of the pointer data are read out and the errors of the corresponding sentences are corrected, resulting in the end of the correction mode, so that the contents of the memory 11 has been rewritten into correct sentences.

As described above, in the proofreading mode, when finding errors in the sentences as hearing a synthetic speech, the operator assigns the pointer data to the error contained sentences. This makes very easy the finding and correction of error sentences in the correction mode.

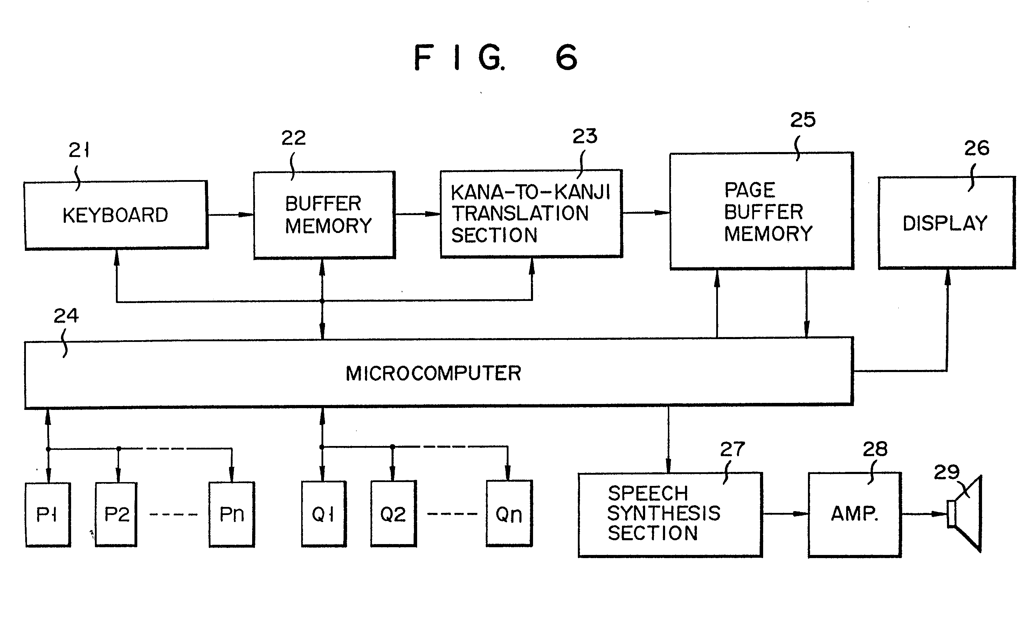

Fig. 6 shows in block form a proofreading/correction apparatus used in a Japanese word processor. As shown, the output of keyboard 21 is connected through KANA-TO-KANJI translator 23 via buffer memory 22. This translator 23 is designed based on the KANA-TO-KANJI translation technique described in THE JAPANESE WORD PROCESSOR JW-10 in INFORMATION PROCESSING 80, S. H. Lavington(ed) IFIP, 1980 published by North-holding Publishing Company.

Keyboard 21, buffer 22 and KANA-TO-KANJI translator 23 are connected to microcomputer 24 and controlled by it. The output of KANA-TO-KANJI translator 23 is connected to page buffer memory 25. Page buffer memory 25 is connected by microcomputer 24. The microcomputer controls the read and write of data for the memory. Microcomputer 24 is further connected to pointer registers Pl to Pn and Ql to Qn, display 26, and speech synthesis section 27. Section 27 converts the sentence into a synthetic speech signal, as in the previous embodiment, and the converted signal is then coupled with loudspeaker 29 by way of amplifier 28.

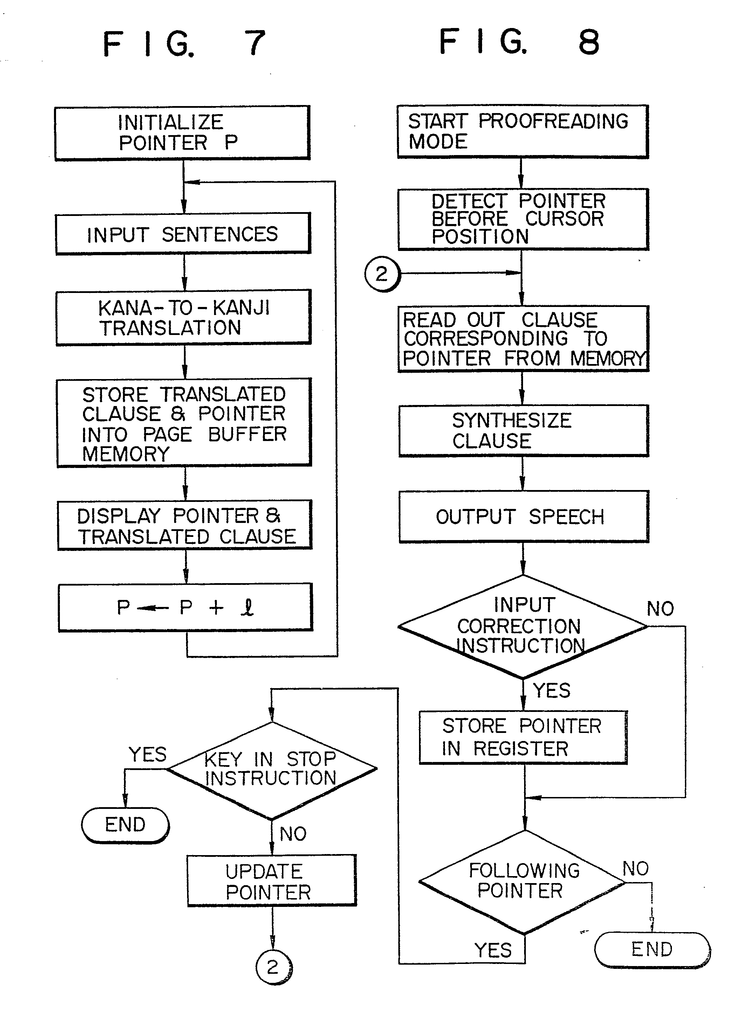

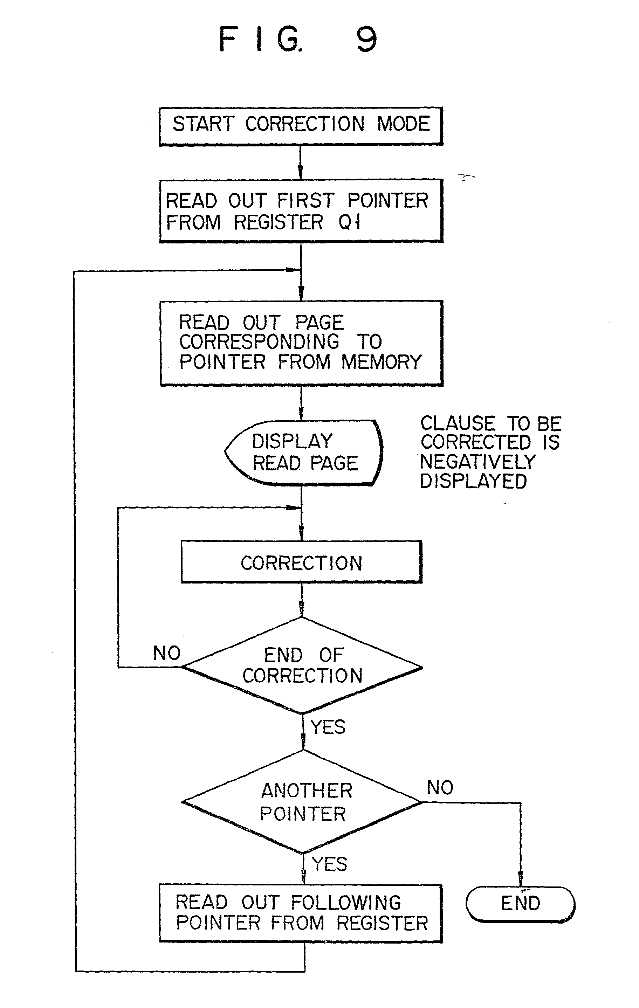

The operation of the Fig. 6 apparatus will be given referring to Figs. 7 to 9.

In the input mode shown in Fig. 7, the pointer registers Pl to Pn and Ql to Qn are all initialized in the first step. Then, an operator keys in a Japanese sentence in KANAs, while seeing an original document. In this case, an instruction indicating a clause is keyed in whenever the clause is input. Keyboard 21 transfers the codes representative of KANA to buffer memory 22. The KANA codes are input to KANA-TO-KANJI translation section 23. In this section, KANA codes representing KANJI are converted into KANJI. The clause containing the translated KANJI is then transferred to page buffer 25. Microcomputer 13 responds to the caluse instruction input through buffer memory 22 to load first pointer to register Pl, and attaches this pointer data to the head of the clause data, and stores them into page buffer memory 25.

The clause containing KANJI is read out from page buffer memory 25, and input to display 26. The display displays the clause at the location of the pointer.

The pointer is updated according to the fomula $P = P + \ell$ where P is the pointer stored in pointer register Pl and $\ell$ is the number of characters contained in the clause stored in page buffer memory 25. The updated pointer P is loaded into pointer register P2. When the next clause is input by keyboard 21, the new clause, together with a new pointer, is stored into page buffer memory 25, through the control flow similar to the above, and finally is displayed on the CRT screen of display 26. All of the necessary sentences are input and the input mode ends. At the end of this input mode, the pointer data formed for each sentence is stored in each of pointer registers Pl to Pn.

The proofreading mode follows the input mode. As shown in Fig. 8 showing its control flow, an operator selects the proofreading mode and instructs its execution by keyboard 21. Upon the instruction, microcomputer 24 reads out the sentence on the first page from page buffer memory 25, and displays it by display 26. The operator moves a cursor mark to a desired sentence to be proofread. Microcomputer 24 reads out the pointer previous to the cursor position from the pointer register. For proofreading the beginning of the sentence, the pointer data of pointer Pl is read out. By this data, page buffer memory 25 is addressed and produces the clause as specified by the pointer data of pointer register Pl. The read out clause is input to speech synthesis section 27, and converted into a synthetic speech signal. This signal is input through amplifier 28 to loudspeaker 29 which in turn produces its synthetic speech.

The sentence stored in page buffer memory 25 is read out every sentence from memory 25, as described above, and output from loudspeaker in the form of the synthetic speech. If the operator, while hearing the speech, finds an error, he inputs a correction instruction from keyboard 21. When receiving this, microcomputer 24 transfers the pointer data P2, for example, which corresponds to the clause requiring the correction, to proofreading pointer register Q1, and stores the pointer data of pointer register P1 in that register Q1. Then, microcomputer 24 checks if a stop instruction is present or not, and updates the pointer, that is, reads out the next pointer e.g. pointer data P3. By this pointer data, page buffer memory 25 is addressed. Subsequently, the above-mentioned operation is repeated, so that every time the correction instruction is input, the pointer data in input pointer registers P1 to Pn are selectively transferred to proofreading pointer regis-ters Q1 to Qn. In this way, the final pointer data in anyone of these registers P1 to Pn is read out, and all of the sentences stored in memory 25 are output in the form of synthetic speech. At this point, the proofreading mode ends.

Following the proofreading mode, the correction mode is executed. When this mode is set up by keyboard 21, pointer data is read out from first register Q1, and addresses page buffer memory 25. A sentence including the error contained clause is read out from page buffer memory 25, and is displayed by display 26. For distinguishing the error contained clause from other correct clauses, it is displayed in a negative fashion, as shown in Fig. 11. The error contained clause can be corrected by setting up the correction mode. Upon the completion of correction, the next new pointer data is read out from the corresponding register, i.e. Q2, through the check flow to check if another pointer data is present in proofreading registers Q1 to Qn. Then, page buffer memory 25 is accessed by the new pointer data, and produces a sentence including the error contained clause. Subsequently, correction is made of all of the clauses with pointers.

As described above, according to the present invention, input sentences are read out every given segmented unit of a sentence, e.g. clause, and the read out clause is converted into a synthetic speech by the synthesis conversion section. When the synthetic speech is different from the sentence on the original document, an operator inputs a correction instruction, to assign a pointer to the error contained clause. In the correction mode, this pointer is detected, and the clause specified by the pointer is displayed in a special form to give an easy check of the corrected clause. This features considerably lessens the load on the operator, and gives good operability of the processor.

It is evident that this invention is applicable for the data input apparatus, in addition to the word processor. When input sentences are stored into an external memory device, each input sentence or clause may be attached with codes representing punctuation in the sentences. When such a special code is not used, a pointer is attached to the clause for which the correction instruction is issued. A page containing the pointer attached clause is displayed for its correction.

Claims:

1.   A proofreading/correction apparatus comprising:
storing means (14, 25) for storing input data including a series of characters;
display means (16, 26) for displaying said data in the form of a series of characters;
read out means (13, 24) for outputting said data of character series in the form of segmented information items from said storing means;
speech synthesis means (17, 19, 27, 29) for outputting said data read out by said read out means as synthesis speech;
means (11, 21) for selectively generating correction instruction in the synthesis speech output from said speech synthesis means;
means (Q1 to Qn), in response to the correction instruction of said correction generating means, for selectively setting pointing data in said segmented information items of said character series, and storing said pointing data; and
said read out means (13) causing said display means to display said segmented information items corresponding to said pointing data.

2.   A proofreading/correction apparatus according to claim 1, characterized in that said storing means includes a memory (14, 25) for storing sentences assembled by a plurality of clauses, and said reading out means is means (13) for reading out said input data for each clause.

3.   A proofreading/correction apparatus according to claim 1, characterized in that said pointing data setting/storing means includes registers (Q1 to Qn) for storing pointing data selectively set in said segmented information items.

4.   A proofreading/correction apparatus according to claim 1, characterized in that said display means is

**0200389**

means (16, 26) capable of displaying the segmented information items corresponding to pointing data in the display format different from other information items.

5. A proofreading/correction apparatus according to claim 1, characterized in that said storing means includes means (25) for storing said information data as a plurality of information items, and register means (P1 to Pn) for storing input pointing data as set for each of said segmented information items.

# F I G. 1

# FIG. 2

```
┌─────────────────┐
│  INITIALIZE     │
│  POINTER        │
└─────────────────┘
         │
         ▼
┌─────────────────┐
│  INPUT          │
│  ENGLISH        │
│  SENTENCES      │
└─────────────────┘
         │
         ▼
┌─────────────────┐
│  STORE          │
│  SENTENCES      │
│  INTO MEMORY    │
└─────────────────┘
         │
         ▼
    ⟨ SENTENCE ⟩
```

# FIG. 3

```
┌──────────────────────┐
│  START  PROOFREADING │
│  MODE                │
└──────────────────────┘
           │
           ▼
┌──────────────────────┐
│  DETECT SPACE        │
│  AS POINTER          │
└──────────────────────┘
           │
  (1)──────┤
           ▼
┌──────────────────────┐
│  READ OUT SENTENCE   │
│  CORRESPONDING TO    │
│  POINTER FROM MEMORY │
└──────────────────────┘
           │
           ▼
┌──────────────────────┐
│  SYNTHESIZE          │
│  SENTENCE            │
└──────────────────────┘
           │
           ▼
┌──────────────────────┐
│  OUTPUT SPEECH       │
└──────────────────────┘
           │
           ▼
      ◇ INPUT
        CORRECTION     ── NO
        INSTRUCTION ◇
           │ YES
           ▼
┌──────────────────────┐
│  STORE POINTER       │
│  INTO REGISTER       │
└──────────────────────┘
           │
           ▼
    ◇ FOLLOWING      ── NO
      POINTER ◇
        │ YES
```

```
      ◇ KEY IN STOP ◇
 YES ─┤ INSTRUCTION
      │           │ NO
      ▼           ▼
   ( END )  ┌──────────────────┐
            │ DETECT FOLLOWING │
            │ POINTER          │
            └──────────────────┘
                    │
                    ▼
                   (1)
```

( END )

# F I G. 4

```
┌─────────────────────────────┐
│   START CORRECTION MODE      │
└─────────────────────────────┘
              │
              ▼
┌─────────────────────────────┐
│  READ OUT FIRST POINTER      │
│  FROM REGISTER Q1            │
└─────────────────────────────┘
              │
              ▼
┌─────────────────────────────┐
│  READ OUT SENTENCE           │
│  CORRESPONDING TO            │
│  POINTER FROM MEMORY         │
└─────────────────────────────┘
              │
              ▼
      (     SENTENCE     )
              │
              ▼
┌─────────────────────────────┐
│        CORRECTION            │
└─────────────────────────────┘
              │
              ▼
      NO ◄── ◇ END OF
             CORRECTION
              │ YES
              ▼
             ◇ ANOTHER ──► NO ──► ( END )
               POINTER
              │ YES
              ▼
┌─────────────────────────────┐
│  READ OUT FOLLOWING          │
│  POINTER FROM REGISTER       │
└─────────────────────────────┘
```

# F I G. 5

Doc. Id: OOIA   Page:1   Line : 1   Col : 1

LI . . ◆ . . . . ◆ . . . . ◆ . . . . ◆ . . . . ◆ . . . . ◆ . . . . ◆ . . . . ◆ . . . . ◆ . . . . ◆ . . . . . . . . . . . . R

The sentence now can be read aloud by a synthetic speech.

( Document End )   FDD # 1 FDID : Samp1

# F I G. 6

KEYBOARD (21) → BUFFER MEMORY (22) → KANA-TO-KANJI TRANSLATION SECTION (23) → PAGE BUFFER MEMORY (25) → DISPLAY (26)

MICROCOMPUTER (24)

P1  P2  ----  Pn    Q1  Q2  ----  Qn

SPEECH SYNTHESIS SECTION (27) → AMP. (28) → (29)

5/8

0200389

# FIG. 7

```
┌─────────────────────┐
│     INITIALIZE      │
│     POINTER P       │
└─────────────────────┘
          │
          ▼ ◄──────────────┐
┌─────────────────────┐    │
│   INPUT SENTENCES   │    │
└─────────────────────┘    │
          │                │
          ▼                │
┌─────────────────────┐    │
│   KANA-TO-KANJI     │    │
│   TRANSLATION       │    │
└─────────────────────┘    │
          │                │
          ▼                │
┌─────────────────────┐    │
│  STORE TRANSLATED   │    │
│  CLAUSE & POINTER   │    │
│  INTO PAGE BUFFER   │    │
│  MEMORY             │    │
└─────────────────────┘    │
          │                │
          ▼                │
┌─────────────────────┐    │
│  DISPLAY POINTER &  │    │
│  TRANSLATED CLAUSE  │    │
└─────────────────────┘    │
          │                │
          ▼                │
┌─────────────────────┐    │
│     P ← P + ℓ       │    │
└─────────────────────┘    │
          │                │
          └────────────────┘
```

```
      ┌─────────────────┐
      ▼                 │
  ╱─────────────╲       │
 ╱ KEY IN STOP   ╲ YES  │
◄  INSTRUCTION    ╲─────┤
 ╲               ╱      │
  ╲─────────────╱       │
   │ END              │
   │NO                │
   ▼                  │
┌──────────────┐      │
│   UPDATE     │      │
│   POINTER    │      │
└──────────────┘      │
   │                  │
   ▼                  │
  (2)
```

# FIG. 8

```
┌─────────────────────┐
│  START PROOFREADING │
│  MODE               │
└─────────────────────┘
          │
          ▼
┌─────────────────────┐
│  DETECT POINTER     │
│  BEFORE CURSOR      │
│  POSITION           │
└─────────────────────┘
          │
 (2)─────►│
          ▼
┌─────────────────────┐
│  READ OUT CLAUSE    │
│  CORRESPONDING TO   │
│  POINTER FROM MEMORY│
└─────────────────────┘
          │
          ▼
┌─────────────────────┐
│   SYNTHESIZE        │
│   CLAUSE            │
└─────────────────────┘
          │
          ▼
┌─────────────────────┐
│   OUTPUT SPEECH     │
└─────────────────────┘
          │
          ▼
      ╱─────────────╲
     ╱    INPUT      ╲  NO
    ╱  CORRECTION     ╲────┐
    ╲  INSTRUCTION    ╱    │
     ╲───────────────╱     │
          │ YES            │
          ▼                │
┌─────────────────────┐    │
│   STORE POINTER     │    │
│   IN REGISTER       │    │
└─────────────────────┘    │
          │                │
          ▼ ◄──────────────┘
      ╱─────────────╲
     ╱  FOLLOWING    ╲  NO
     ╲   POINTER     ╱────┐
      ╲─────────────╱     │
          │ YES         ( END )
```

# F I G. 9

0200389

# FIG. 10

合成音にて文章を読むことができるように成りました。

# FIG. 11

合成音にて文章を読むことができるように成りました。